# FASCICULE DE BREVET EUROPEEN

(11) **EP 0 809 342 B1**
(45) Date de publication et mention de la délivrance du brevet: **14.11.2001**
(21) Numéro de dépôt: 97401082.9
(22) Date de dépôt: 15.05.1997
(51) Int. Cl.: H02J 7/00

(54) **Agencement pour le contrôle de la charge d'un ensemble modulaire de cellules électrochimiques raccordées en série et module correspondant de mesure pour cellule**
Anordnung zur Regelung der Ladung einer modularen Einheit von elektrochemischen Zellen, die in Reihe geschaltet sind und entsprechendes Modul zur Messung der Zellen
Arrangement for controlling the charge of a modular assembly of electrochemical cells connected in series and corresponding module for measuring the cells

(30) Priorité: 21.05.1996 FR 9606273
(43) Date de publication de la demande: 26.11.1997
(73) Titulaire: ALCATEL, 75008 Paris (FR)
(72) Inventeur: Perelle, Michel, 37210 Parcay-Meslay (FR)
(74) Mandataire: Laroche, Danièle

(56) Documents cités:
- EP-A- 0 693 814
- WO-A-92/06525
- WO-A-93/15544
- WO-A-96/12333

## Description

L'invention concerne un agencement pour le contrôle de la charge d'un ensemble modulaire composé d'une pluralité de cellules électrochimiques qui sont reliées en série par leurs bornes d'alimentation respectives entre deux de ces bornes situées en extrémité de l'ensemble, ledit agencement associant à chaque cellule un module de mesure qui comporte des moyens pour mesurer la tension entre les bornes d'alimentation de la cellule et des moyens pour fournir des signaux de mesure à destination d'une unité commune de commande de charge agissant notamment sur les modules.

Un tel agencement est notamment décrit dans le document FR-A-2684249. Toutefois dans certaines applications et en particulier lorsqu'un ensemble modulaire tel qu'évoqué ci-dessus est destiné à l'alimentation en énergie d'un véhicule électrique, il peut être particulièrement important qu'un tel agencement puisse exploiter des mesures tout à fait précises. En effet ces mesures peuvent permettre d'améliorer la gestion de l'ensemble modulaire en phase d'exploitation, en particulier lorsqu'une grande fiabilité et une grande longévité sont recherchées et que par ailleurs il existe des risques importants en cas d'exploitation inadéquate, par exemple en cas de surcharge pour des cellules d'un ensemble modulaire en cours de charge, Il est particulièrement important de pouvoir vérifier le bon fonctionnement des moyens de mesure pour être sûr par exemple de leur fidélité et par conséquent de pouvoir éventuellement les réétalonner, si besoin est.

On connaît par ailleurs le document EP-A-0121547 qui décrit un régulateur de charge pour ensemble modulaire de cellules électrochimiques plus particulièrement destiné à servir en secours et en conséquence à être quasi-constamment rechargé à une valeur optimale. Chaque cellule est dotée d'un montage individuel qui est connecté aux bornes d'alimentation de cette cellule et qui mesure la tension présente entre ces bornes pour réguler le courant de charge appliqué à cette cellule en dérivant progressivement le courant de charge dans un circuit externe à la cellule à partir d'une valeur déterminée de tension de déclenchement de dérivation de manière à amener sans risque la cellule à sa charge optimale. Un tel montage n'est cependant pas bien adapté à l'obtention d'une charge optimale dans le cas d'une cellule d'ensemble modulaire soumis par nécessité à de grandes variations d'état de charge, comme est notamment susceptible de l'être un ensemble exploité en tant que source d'énergie pour véhicule électrique.

L'invention propose donc un agencement pour le contrôle de la charge d'un ensemble modulaire selon la revendication 1. Elle propose aussi un module selon la revendication 6.

Dans une forme de réalisation, l'unité centrale de commande comporte des moyens lui permettant de commander avec précision la réduction du courant de charge, fourni par un chargeur à l'ensemble, par exploitation des signaux images fournis par les circuits de mesure de précision respectifs des interfaces associées aux cellules de l'ensemble, lorsque les tensions individuellement présentes aux bornes d'alimentation de ces cellules atteignent progressivement ladite valeur de référence définie.

Dans une forme de réalisation, l'unité centrale de commande comporte des moyens lui permettant de déterminer la valeur de la résistance interne de chaque cellule de l'ensemble qu'elle pilote par détermination de la variation de tension obtenue par le circuit de mesure de précision associé à la cellule considérée pour une variation déterminée de l'intensité du courant de charge fourni à l'ensemble par le chargeur sous sa commande.

Dans une forme de réalisation, les moyens pour mesurer la tension entre les bornes d'alimentation d'une cellule comportent un autre circuit de mesure fournissant un signal de mesure représentatif de la tension présente aux bornes d'alimentation de la cellule et des moyens d'aiguillage pour permettant d'orienter sélectivement vers cette unité centrale de commande les signaux images fournis par chacun des circuits de mesure associés à la même cellule.

Dans une forme de réalisation, l'unité centrale de commande de l'agencement comporte des moyens permettant un étalonnage du circuit de mesure affecté à une cellule à l'aide du circuit de mesure de précision affecté à la même cellule.

Dans une forme de réalisation, les moyens pour mesurer la tension dont dispose chaque module comportent un circuit de mesure de précision à effet multiplicateur permettant à ce module de fournir un signal image avec une forte amplification, lorsque la tension qu'il mesure correspond au moins approximativement à une valeur de référence définie pour lui qui est éventuellement modifiable, de manière à fournir à l'unité centrale de commande, un signal image de précision de la tension présente aux bornes d'alimentation de la cellule associée à lui, lorsque la tension mesurée est au voisinage de la valeur de référence.

L'invention, ses caractéristiques et ses avantages sont précisés dans la description qui suit en liaison avec les figures évoquées ci-dessous.

La figure 1 présente un schéma d'un agencement selon l'invention pour le contrôle de la charge d'un ensemble modulaire composé d'une pluralité de cellules électrochimiques reliées en série par leurs bornes d'alimentation respectives.

La figure 2 présente un diagramme montrant la variation du signal de sortie d'un circuit de mesure de précision selon l'invention en fonction de la variation de la tension mesurée par ce circuit dans une gamme limitée prédéterminée.

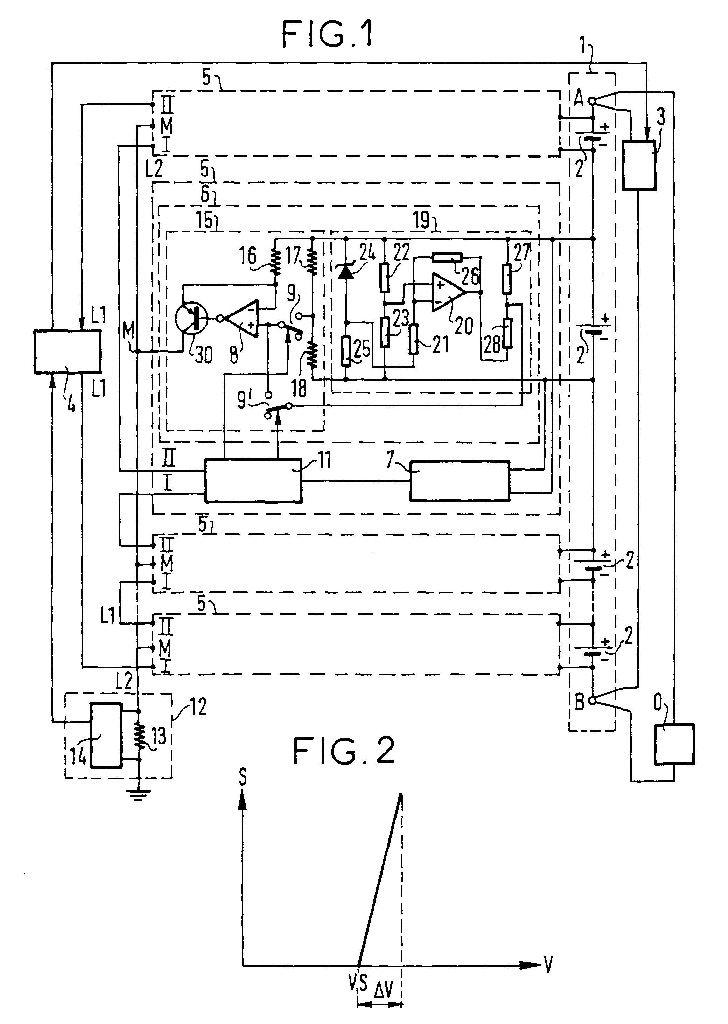

Le schéma présenté en figure 1 montre un circuit d'utilisation 0 destiné à être alimenté par un ensemble modulaire 1, de type accumulateur électrique, qui est lui-même supposé composé d'une pluralité de cellules électrochimiques 2, identiques, connectées en série par leurs bornes d'alimentation respectives qui sont référencées "+" et "-".

Les cellules 2 sont supposées identiquement composées d'un ou de plusieurs éléments électrochimiques eux aussi pratiquement identiques.

L'ensemble 1 est susceptible d'être raccordé, au moins temporairement, à un chargeur 3 aux bornes d'alimentation duquel l'ensemble est relié par des bornes d'extrémité référencées A et B. Le chargeur est susceptible d'être d'un type connu, il est supposé contrôlé par un agencement permettant notamment le contrôle de la charge de l'ensemble 1, cet agencement comporte une unité centrale de commande 4 permettant notamment de contrôler la charge et l'équilibrage de charge des cellules 2 par l'intermédiaire d'interfaces 5 individuellement associées chacune à une cellule. Chaque interface 5 est en conséquence connectée aux bornes d'alimentation "+", "-" de la cellule 2 à laquelle elle est affectée.

L'unité centrale de commande 4 est par exemple organisée autour d'un microcontrôleur non représenté qui comporte des ports d'entrée-sortie, notamment pour échanger des signaux avec les interfaces 5 et avec le chargeur 3. Ce dernier est susceptible d'être un modèle classique et il ne sera pas développé ici dans la mesure où il n'a qu'un rapport indirect avec l'objet de l'invention.

Chaque interface 5 comporte notamment des moyens, ici supposés réalisés sous la forme d'un module de mesure 6, lui permettant de mesurer la tension V présente entre les bornes d'alimentation "+", "-" de la cellule 2 à laquelle elle est associée. Dans l'exemple d'interface 5 ici envisagé, il y a un module de dérivation 7 de courant associé à chaque module de mesure 6 aux bornes d'alimentation de la cellule 2 à laquelle cette interface est associée. Ce module permet d'établir une liaison de dérivation entre bornes de cellule et en conséquence d'assurer l'équilibrage de la charge de la cellule, selon une technique bien connue. Chaque module de dérivation est régi par l'unité centrale de commande 4 au travers d'un circuit de commande 11 qui sert également au pilotage du module de mesure 6 de l'interface.

Les modules de dérivation 7 ne seront pas développés ici dans la mesure où ils n'ont qu'un rapport indirect avec l'objet de la présente invention.

Les circuits de commande 11 que comportent respectivement les interfaces 5 de l'agencement de contrôle sont ici supposés reliés en série à l'unité centrale de commande 4 par l'intermédiaire d'une liaison, monofilaire, de commande L1 à laquelle chaque interface 5 ou plus précisément chaque circuit de commande 11 est relié via deux bornes I et II. La liaison de commande L1 est ici supposée transmettre, sous forme de trains successifs, des impulsions de commande émanant de l'unité centrale de commande 4.

De telles organisations de commande par trains d'impulsions sont notamment décrites dans les documents FR-A-2713781 et FR-A-2719126 qui sont respectivement relatifs à une organisation de transmission unidirectionnelle et à une organisation de transmission potentiellement bidirectionnelle des impulsions.

Dans la réalisation envisagée ici le circuit de commande 11 de chaque interface 5 assure aussi le contrôle des informations fournies par le module de mesure 6 de cette interface à destination de l'unité centrale de commande 4 à laquelle ces informations sont transmises par l'intermédiaire d'un transducteur de mesure 12. Les modules de mesure 6 ici prévus sont assimilables à des générateurs de courant dans la mesure où ils sont supposés fournir des signaux de mesure transmis sous la forme de courants au transducteur de mesure 12 communément exploité par tous les modules. Chaque module de mesure génère un courant qui est l'image de la valeur qu'il mesure, ce courant étant destiné à être transmis au transducteur 12. Ce dernier comporte par exemple une résistance de mesure 13 associée à un dispositif convertisseur 14 qui permet de numériser et éventuellement prétraiter les signaux au profit de l'unité centrale de commande 4 à laquelle le dispositif convertisseur 14 est relié.

A cet effet chaque module de mesure 6 transmet les signaux de mesure en courant obtenus pour la cellule à laquelle il est associé au transducteur de mesure 12, commun. Cette transmission s'effectue via une liaison de mesure L2 commune, à laquelle chaque module de mesure est raccordé par une sortie M individuelle.

Dans une forme préférée de réalisation, chaque module de mesure 6 comporte au moins des moyens pour mesurer la tension V existant entre les bornes d'alimentation de la cellule 2 à laquelle l'interface 5 qui le comporte est associée. A cet effet, ces moyens comportent au moins un circuit de mesure 15 permettant de déterminer la tension V présente entre les bornes d'alimentation "+", "-" de la cellule 2 associée dans toute la gamme des tensions contrôlées aux bornes de la cellule.

Ce circuit de mesure 15 est par exemple constitué par un montage classique à amplificateur opérationnel 8 commandé en fonction de la tension V au travers d'un pont comportant deux résistances 17 et 18 montées en série, lorsqu'il est mis en service par l'intermédiaire d'un organe d'aiguillage 9 sous l'action du circuit de commande 11 lui-même régi par l'unité centrale de commande 4. Les résistances 17 et 18 sont connectées aux bornes de la cellule 2 dont la tension est à mesurer et le point commun à ces résistances est relié à l'entrée non-inverseuse "+" de l'amplificateur opérationnel 8, via l'organe d'aiguillage 9, lorsque celui-ci est actionné. L'amplificateur opérationnel 8 est relié par son entrée inverseuse "-" à la borne d'alimentation positive de la cellule 2, via une résistance 16, il agit par une sortie sur la base d'un transistor 30. Ce dernier est ici supposé relié par son émetteur au même potentiel que l'entrée inverseuse de l'amplificateur opérationnel 8 et il fournit un courant fonction du niveau du signal apparaissant à l'entrée non-inverseuse "+" de cet amplificateur. Le courant circulant via le collecteur du transistor 30 est le reflet de la tension présente à l'entrée non-inverseuse "+" de l'amplificateur opérationnel 8, il est transmis à la sortie M du circuit de mesure 15 et du module de mesure 6 qui les comporte. Un tel circuit de mesure 15 a par exemple une précision de mesure de l'ordre de 0,5 % qui est suffisante d'une manière générale.

Un circuit de mesure de précision 19 est également connecté aux bornes d'alimentation "+", "-" d'une cellule 2 en parallèle au circuit de mesure 15 associé à cette cellule pour permettre une mesure plus fine de la tension V, par exemple en fin de charge, au voisinage d'une valeur choisie de tension de mesure prise à titre de référence. Cette valeur de référence est susceptible d'être définie par des éléments constitutifs du circuit de mesure qui permettent éventuellement sa modification

Ce circuit de mesure de précision 19 associé à une cellule 2 est par exemple constitué par un montage comportant un amplificateur différentiel 20, dont l'entrée non-inverseuse "+" est reliée au point commun à deux résistances 22 et 23 d'un pont diviseur connecté entre les bornes "+", "-" de la cellule 2 associée. L'entrée inverseuse "-" de l'amplificateur différentiel 20 est reliée d'une part à la sortie de cet amplificateur par une résistance de contre-réaction 26, elle est aussi reliée par une résistance 21 au point commun d'un montage comprenant une diode Zener 24 et une résistance 25 reliées en série entre les bornes "-" et "+" évoquées ci-dessus. L'amplificateur différentiel 20 fournit un signal de sortie lorsque la tension V mesurée aux bornes de la cellule dépasse une valeur de seuil VS essentiellement fixée par la diode 24 et les résistances 22 et 23. Cette valeur est par exemple choisie proche de la tension présente entre les bornes d'alimentation "+", "-" d'une cellule en fin de charge.

La sortie de l'amplificateur 20 qui est rebouclée sur l'entrée inverseuse de cet amplificateur, via une résistance de contre-réaction 26, attaque une première extrémité d'une branche de circuit composée par deux résistances 27 et 28 en série dont une seconde extrémité est reliée à la borne d'alimentation positive "+" de la cellule 2 associée de même que la résistance 22 et que l'anode de la diode Zener 24. Le point commun aux deux résistances 27 et 28 est susceptible d'être relié à l'entrée non-inverseuse "+" de l'amplificateur opérationnel 8 par un organe d'aiguillage 9' actionné par l'intermédiaire du circuit de commande 11 de 'l'interface qui les comporte. Comme il est connu les organes d'aiguillage 9 et 9' qui sont actionnables de manière alternative sont susceptibles d'être combinés en une même unité éventuellement susceptible de recevoir d'autres signaux destinés ou non à être transmis séparément, suivant les besoins.

Dans le cas du circuit de mesure de précision 19, le choix du rapport entre les valeurs des résistances 22 et 23 défini en liaison avec la valeur de la tension définie par la diode Zener 24, la valeur de tension de référence par rapport à laquelle la mesure est à effectuer; un potentiomètre de faible valeur non représenté éventuellement inséré entre ces résistances 22, 23 permet éventuellement d'ajuster cette valeur de référence de tension, si besoin est. Le choix du rapport entre les résistances 21 et 26, en tenant compte des ponts respectivement constitués par les résistances 22 et 23 d'une part et 27, 28 d'autre part, permet par ailleurs de définir le facteur d'amplification désiré autour de la valeur de référence de tension choisie, ce facteur est par exemple choisi de l'ordre de 10, 100 ou 1000 et permet donc la fourniture d'un signal image de précision de la tension V mesurée.

Le circuit de mesure de précision 19 agencé de la manière définie ci-dessus permet donc d'obtenir un effet d'amplification comparable à celui fourni par une loupe en optique pour une gamme limitée de variation de tension V, un tel effet étant symbolisé sur le diagramme S / V présenté en figure 2 pour représenter la variation de la tension de sortie S obtenue aux bornes de la résistance 28 du circuit de mesure de précision 19 pour une faible variation de la tension V présente aux bornes d'alimentation d'une cellule, une tension de sortie S de l'ordre de 2 volts étant par exemple susceptible d'être obtenue pour une variation de l'ordre de 0, 1 volt de la tension V. Ceci permet donc d'arrêter le processus de charge avec précision cellule par cellule et le plus tard possible sans risquer de détérioration des cellules, puisqu'il est ainsi possible d'agir sur le chargeur 3 de manière à réduire le courant de charge avec une très grande précision en phase de charge. Ceci permet aussi une mesure précise de la résistance interne d'une cellule individuelle par calcul en tenant compte de la variation de tension induite à ses bornes par une variation du courant de charge fourni à l'ensemble ou de décharge fourni par ce dernier. A titre d'exemple, la détermination de la résistance interne d'une cellule 2 peut être réalisée par l'unité centrale de commande 4, dotée de moyens appropriés connus, à partir d'une variation de courant conduisant à une variation de tension de l'ordre de cinq millivolts, cette variation de courant étant déclenchée par une commande envoyée par l'unité centrale de commande 4 au chargeur 3 en cas de charge. La valeur de la variation de courant est bien entendu choisie de manière connue en soi en fonction des cellules 2 constituant l'ensemble 1 et le rapport entre variations correspondantes de tension et de courant fournit la valeur de résistance cherchée.

L'effet de loupe obtenu avec le circuit de mesure de précision 19 associé à une cellule 2 permet aussi d'étalonner et/ou réétalonner la portion de chaîne de mesure qui est propre à cette cellule et qui comporte le circuit de mesure 15 associé à cette cellule 2. Cet étalonnage ou réétalonnage est réalisé par l'unité centrale de commande par comparaison des mesures effectuées quasi-simultanément par les deux circuits de mesure 15 et 19, lorsque la tension aux bornes de la cellule 2 associée à ces circuits correspond à la valeur de référence de tension du circuit de mesure de précision 19, l'unité centrale de commande est alors dotée de moyens programmés qui ne seront pas décrits ici dans la mesure où ils relèvent de techniques bien connues.

Les résultats des mesures effectuées avec les circuits de précisions 19 pour les cellules 2 auxquels ils sont associés sont également susceptibles d'être exploités par l'unité centrale de commande 4 pour contrôler avec une grande précision le chargeur 3 et plus précisément le courant de charge appliqué par ce chargeur à l'ensemble 1.

## Revendications

1. Agencement pour le contrôle de la charge d'un ensemble modulaire (1) composé d'une pluralité de cellules électrochimiques (2) qui sont reliées en série par leurs bornes d'alimentation respectives (+, -) entre deux de ses bornes (A, B) situées en extrémité de l'ensemble,
ledit agencement comportant :
• une unité centrale de commande (4) ;
• pour chaque cellule, une interface individuelle (5) dotée d'un module de mesure (6) qui comporte :
• des moyens pour mesurer la tension entre les bornes d'alimentation de la cellule et
• des moyens pour fournir un signal, image de la mesure de tension réalisée, à l'unité centrale de commande (4) via un transducteur de mesure commun (12) et sous le contrôle de cette unité centrale de commande,
**caractérisé en ce que** chaque module de mesure comporte un circuit de mesure de précision (19) à effet multiplicateur permettant à l'interface de fournir un signal image avec une forte amplification, lorsque la tension mesurée correspond au moins approximativement à une valeur de référence définie pour le circuit de mesure et éventuellement modifiable,
ce circuit fournissant à l'unité centrale de commande, via le transducteur de mesure commun (12), un signal, image de précision de la tension (V) présente aux bornes d'alimentation de chaque cellule, lorsque la tension mesurée est au voisinage de la valeur de référence.

2. Agencement selon la revendication 1, **caractérisé en ce que** l'unité centrale de commande (4) comporte des moyens lui permettant de commander avec précision la réduction du courant de charge, fourni à l'ensemble (1) par un chargeur (3), par exploitation des signaux images fournis par les circuits de mesure de précision (19) respectifs des interfaces associées aux cellules de l'ensemble, lorsque les tensions individuellement présentes aux bornes d'alimentation de ces cellules atteignent progressivement ladite valeur de référence définie.

3. Agencement selon la revendication 1, **caractérisé en ce que** l'unité centrale de commande (4) comporte des moyens lui permettant de déterminer la valeur de la résistance interne de chaque cellule (2) de l'ensemble (1) qu'elle pilote par détermination de la variation de tension obtenue par le circuit de mesure de précision (19) associé à la cellule considérée pour une variation déterminée de l'intensité du courant de charge fourni à l'ensemble par le chargeur (3) sous sa commande.

4. Agencement selon la revendication 1, **caractérisé en ce que** le module de mesure (6) d'une interface individuelle de cellule comporte un autre circuit de mesure (15) apte à fournir un signal de mesure représentatif de la tension présente aux bornes d'alimentation de la cellule à laquelle l'interface est associée et des moyens d'aiguillage (9, 9') placés sous le contrôle de l'unité centrale de commande pour permettre d'orienter sélectivement vers cette unité centrale de commande les signaux images fournis par chacun des circuits de mesure (15, 19) associés à la même cellule.

5. Agencement selon la revendication 4, **caractérisé en ce que** l'unité centrale de commande comporte des moyens permettant un étalonnage du circuit de mesure (15) affecté à une cellule à l'aide du circuit de mesure de précision (19) affecté à la même cellule.

6. Module, pour la mesure de la tension entre les bornes d'une cellule électrochimique (2) d'un ensemble modulaire (1) où de telles cellules sont reliées en série, dans le cadre d'un agencement de contrôle qui est régi par une unité centrale de commande et où chaque module (6) comporte des moyens pour mesurer la tension entre les bornes d'alimentation d'une cellule électrochimique correspondante (2) à laquelle il est associé et des moyens pour fournir un signal image de la mesure de tension réalisée, à l'unité centrale de commande via un transducteur commun de mesure (12), sous le contrôle de cette unité, chacun des modules étant **caractérisé en ce qu'**il comporte un circuit de mesure de précision (19) à effet multiplicateur lui permettant de fournir un signal image avec une forte amplification, lorsque la tension qu'il mesure correspond au moins approximativement à une valeur de référence définie pour lui qui est éventuellement modifiable, de manière à fournir à l'unité centrale de commande, un signal image de précision de la tension (V) présente aux bornes d'alimentation de la cellule associée à lui, lorsque la tension mesurée est au voisinage de la valeur de référence.

7. Module selon la revendication 6, **caractérisé en ce qu'**il comporte un autre circuit de mesure (15) apte à fournir un signal de mesure représentatif de la tension présente aux bornes d'alimentation de la cellule à laquelle le module est associé et des moyens d'aiguillage (9, 9') placés sous le contrôle de l'unité centrale de commande pour permettre d'orienter sélectivement vers cette unité centrale de commande les signaux images fournis par chacun des circuits de mesure (15, 19) associés à la même cellule.

## Claims

1. A system for controlling charging of a modular set (1) made up of a plurality of electrochemical cells (2) which are connected in series via their respective power supply terminals (+, -) between two such terminals (A, B) situated at the ends of the set,
said system including:
· a central control unit (4);
· for each cell, an individual interface (5) provided with a measurement module (6) which comprises:
· means for measuring the voltage between the power supply terminals of the cell; and
· means for delivering a signal that is an image of the measured voltage to the central control unit (4) via a common measurement transducer (12) and under the control of said central control unit,
the system being **characterized in that** each measurement module further comprises a precision measurement circuit (19) having a multiplying effect, enabling the interface to deliver an image signal with a large amount of amplification when the measured voltage corresponds at least approximately to a reference value that is defined for the measurement circuit and is optionally modifiable,
said circuit delivering a signal to the central control unit via the common measurement transducer (12), which signal is an accurate image of the voltage (V) present across the power supply terminals of each cell when the measured voltage is in the vicinity of the reference value.

2. A system according to claim 1, **characterized in that** the central control unit (4) comprises means enabling it to control accurately a reduction in charging current delivered to the set (1) by a charger (3), by making use of the image signals provided by the respective precision measurement circuits (19) of the interfaces associated with the cells in the set, as the voltages individually present across the power supply terminals of said cells progressively reach said defined reference value.

3. A system according to claim 1, **characterized in that** the central control unit (4) includes means enabling it to determine the internal resistance of each cell (2) of the set (1) under its control by determining the change of voltage obtained by the precision measurement circuit (19) associated with the cell under consideration in response to a determined change in the charging current delivered to the set by the charger (3) under its control.

4. A system according to claim 1, **characterized in that** the measurement module (6) of an individual cell interface includes another measurement circuit (15) suitable for providing a measurement signal representative of the voltage present across the power supply terminals of the cell with which the interface is associated, and switch means (9, 9') under the control of the central control unit for selectively directing to said central control unit the image signals provided by each of the measurement circuits (15, 19) associated with the same cell.

5. A system according to claim 4, **characterized in that** the central control unit includes means enabling the measurement circuit (15) associated with a cell to be calibrated by means of the precision measurement circuit (19) associated with the same cell.

6. A module for measuring the voltage between the terminals of an electrochemical cell (2) of a modular assembly (1) where such cells are connected in series, in the context of a monitoring system governed by a central control unit and in which each module (6) comprises means for measuring the voltage between the power supply terminals of a corresponding electrochemical cell (2) with which it is associated and means for delivering an image signal representing the measured voltage to the central control unit via a common measurement transducer (12) under the control of said unit, each of the modules being **characterized in that** it further comprises a precision measurement circuit (19) having a multiplying effect enabling it to provide an image signal with a large amount of amplification when the voltage it measures corresponds at least approximately to a reference value defined for that circuit and optionally modifiable, thereby supplying the central control unit with an accurate image signal of the voltage (V) present across the power supply terminals of the cell associated therewith when the measured voltage is in the vicinity of the reference value.

7. A module according to claim 6, **characterized in that** it includes another measurement circuit (15) suitable for supplying a measurement signal representative of the voltage present across the power supply terminals of the cell with which the module is associated, and switch means (9, 9') placed under the control of the central control unit to enable said central control unit to receive selectively the image signals supplied by each of the measurement circuits (15, 19) associated with the same cell.

## Patentansprüche

1. Anordnung zum Steuern des Ladens einer modularen Anordnung (1), die aus einer Mehrzahl von elektrochemischen Zellen (2) aufgebaut ist, die mit ihren jeweiligen Versorgungsklemmen (+, -) zwischen zwei am Ende der Anordnung befindlichen dieser Klemmen (A, B) in Reihe verbunden sind, wobei die Anordnung umfasst:
- eine zentrale Steuereinheit (4);
- für jede Zelle eine individuelle Schnittstelle (5), die mit einem Messmodul (6) ausgestattet ist, welches umfasst:
- Mittel zum Messen der Spannung zwischen den Versorgungsklemmen der Zelle und
- Mittel zum Liefern eines Signals, das Abbild der erzeugten Spannung ist, an die zentrale Steuereinheit (4) über einen gemeinsamen Messwandler (12) unter der Steuerung dieser zentralen Steuereinheit,
**dadurch gekennzeichnet, dass** jedes Messmodul eine Präzisionsmessschaltung (19) mit Multiplikatorwirkung aufweist, die es der Schnittstelle erlaubt, ein Abbildsignal mit einer hohen Verstärkung zu liefern, wenn die gemessene Spannung wenigstens näherungsweise einem für die Messschaltung definierten und eventuell veränderbaren Referenzwert entspricht,
wobei diese Schaltung an die zentrale Steuereinheit über den gemeinsamen Messwandler (12) ein Signal, das ein genaues Abbild der an den Versorgungsklemmen jeder Zelle vorliegenden Spannung (V) ist, liefert, wenn die gemessene Spannung in der Nähe des Referenzwertes ist.

2. Anordnung nach Anspruch 1, **dadurch gekennzeichnet, dass** die zentrale Steuereinheit (4) Mittel umfasst, die es ihr erlauben, die Verringerung des Ladestroms, der an die Anordnung (1) durch eine Ladeeinrichtung (3) geliefert wird, durch Ausnutzung der von den jeweiligen Präzisionsmessschaltungen (19) der den Zellen der Anordnung zugeordneten Schnittstellen gelieferten Abbildsignale zu steuern, wenn die individuell an den Versorgungsklemmen dieser Zellen vorliegenden Schaltungen progressiv den definierten Referenzwert erreichen.

3. Anordnung nach Anspruch 1, **dadurch gekennzeichnet, dass** die zentrale Steuereinheit (4) Mittel umfasst, die es ihr erlauben, den Wert des internen Widerstandes jeder Zelle (2) der Anordnung (1), die sie steuert, durch Bestimmung der Spannungsänderung zu ermitteln, die von der der betreffenden Zelle zugeordneten Präzisionsmessschaltung (19) für eine gegebene Änderung der Stärke des Ladestrom erhalten wird, der der Anordnung durch die Ladeeinrichtung (3) unter ihrer Steuerung geliefert wird.

4. Anordnung nach Anspruch 1, **dadurch gekennzeichnet, dass** das Messmodul (6) einer individuellen Zellenschnittstelle eine andere Messschaltung (15), die in der Lage ist, ein für die an den Versorgungsklemmen der Zelle, der die Schnittstelle zugeordnet ist, repräsentatives Messsignal zu liefern, und der Steuerung der zentralen Steuereinheit unterstehende Umschaltmittel (9, 9') umfasst, um selektiv die von jeder dieser der gleichen Zelle zugeordneten Messschaltungen (15, 19) gelieferten Abbildsignale zu der zentralen Steuereinheit leiten zu können.

5. Anordnung nach Anspruch 4, **dadurch gekennzeichnet, dass** die zentrale Steuereinheit Mittel umfasst, die eine Eichung der einer Zelle zugeordneten Messschaltung (15) mit Hilfe der der gleichen Zelle zugeordneten Präzisionsmessschaltung (19) ermöglichen.

6. Modul zum Messen der Spannung zwischen den Klemmen einer elektrochemischen Zelle (2) einer modularen Anordnung (1), wo solche Zellen in Reihe verbunden sind, im Rahmen einer Steueranordnung, die von einer zentralen Steuereinheit verwaltet ist, und wo jedes Modul (6) Mittel zum Messen der Spannung zwischen den Versorgungsklemmen einer entsprechenden elektrochemischen Zelle (2), der es zugeordnet ist, und Mittel zum Liefern eines Abbildsignals der erfassten Spannung an die zentrale Steuereinheit über einen gemeinsamen Messwandler (12) unter der Steuerung dieser Einheit umfasst, wobei jedes dieser Module **dadurch gekennzeichnet ist, dass** es eine Präzisionsmessschaltung (19) mit Multiplikatorwirkung umfasst, die es ihm ermöglicht, ein Abbildsignal mit einer hohen Verstärkung zu liefern, wenn die Spannung, die es misst, wenigstens näherungsweise einem für es definierten Referenzwert entspricht, der eventuell modifizierbar ist, um so an die zentrale Steuereinheit ein Präzisions-Abbildsignal der an den Versorgungsklemmen der ihm zugeordneten Zelle vorhandenen Spannung (V) zu liefern, wenn die gemessene Spannung in der Nähe des Referenzwertes liegt.

7. Modul nach Anspruch 6, **dadurch gekennzeichnet, dass** es eine andere Messschaltung (15), die in der Lage ist, ein für die an den Versorgungsklemmen der Zelle, der das Modul zugeordnet ist, repräsentatives Messsignal zu liefern, und Umschaltmittel (9, 9') umfasst, die der Steuerung der zentralen Steuereinheit unterstehen, um wahlweise die von jeder der dieser gleichen Zelle zugeordneten Messschaltungen (15, 19) gelieferten Abbildsignale zu der zentralen Steuereinheit leiten zu können.
